# EUROPÄISCHE PATENTSCHRIFT

(11) **EP 0 670 111 B1**
(45) Veröffentlichungstag und Bekanntmachung des Hinweises auf die Patenterteilung: **09.07.1997**
(21) Anmeldenummer: 95103129.3
(22) Anmeldetag: 04.03.1995
(51) Int. Cl.: A01K 41/00, A01K 41/06

(54) **Verfahren und Vorrichtung zur Bebrütung von Eiern**
Method and means for incubating eggs
Procédé et installation pour incuber des oeufs

(30) Priorität: 05.03.1994 DE 4407407
(43) Veröffentlichungstag der Anmeldung: 06.09.1995
(73) Patentinhaber: Dratt, Rainer, D-39626 Bismark (DE)
(72) Erfinder: Dratt, Rainer, D-39626 Bismark (DE)
(74) Vertreter: Leinung, Günter

(56) Entgegenhaltungen:
- EP-A- 0 375 030
- DE-C- 256 917
- DE-C- 911 790
- US-A- 1 777 996
- US-A- 4 274 364
- US-A- 4 398 499

## Beschreibung

Die Erfindung bezieht sich auf ein Verfahren und eine dazugehörige Vorrichtung zum Bebrüten von Eiern aller Geflügelarten.

Es ist allgemeiner Stand der Technik, daß die zu bebrütenden Eier in Eieinlagen, sogenannten Horden und Plasttrays, gelegt werden und anschließend in Hordenwagen oder -regale eingeschoben werden. Das notwendige Wenden der Eier erfolgt durch Drehen oder Kippen der Horde bzw. Plasttrays im Hordenwagen oder im Hordenregal.

Um das Verfahren des Bebrütens möglichst effektiv zu gestalten, wurden in der Vergangenheit mehrere Einrichtungen vorgeschlagen.
So beschreibt das deutsche Gebrauchsmuster G 8617367.7 eine Rollwendeeinrichtung für Eier, die aus einem Rahmen und einer gasdurchlässigen Auflage besteht. Im Rahmen befinden sich im auf die Eigröße abgestimmten Abstand zueinander Rundstäbe mit Achsen. Durch Verschieben des Rahmens auf der gasdurchlässigen Unterlage werden die Rundstäbe und somit auch die aufgelegten Eier gedreht. Vor dem Schlupf werden die Rundstäbe entfernt, um den Tieren mehr Freiraum und eine ebene Unterlage zu geben.

Diese Rollwendeeinrichtung sowie Horden, die auf dem Prinzip der Rollwendung basieren und somit einen praktisch nicht begrenzten Wendewinkel ermöglichen, sind aus der Anwendung in Klein- und Kleinstbrütern bekannt. Jedoch weisen die bekannten Systeme folgende Nachteile auf, die ihren Einsatz in der Großraumbrütertechnik verhindern.

Aus den benutzten Rollhorden müssen vor dem Schlupf mit zusätzlichem Aufwand die Rundstäbe entfernt werden.

Weiterhin erlauben die verwendeten glatten Stäbe keine Auflage der Eier auf definierten Eiplätzen. Eine ordnungsgemäße Durchlüftung des Eistapels wird auf Grund der verwendeten Unterlagen für den Rollhordeneinsatz beeinträchtigt.

Verwiesen sei weiterhin auf die offenbarte Lösung nach der DD-PS 295967, die sich auf eine Bruthorde für das maschinelle Bebrüten von Eiern bezieht, bei der die Bruteier auf in der Bruthorde vorgesehenen Rundstäben mit Rollkörpern lagern.
Hier wird zwar die Lage der Bruteier stabilisiert, der Nachteil ist jedoch, daß die Eier zum Schlupf entweder in eine Schlupfhorde umgelegt werden müssen oder die Rollhorde über eine

Schlupfhorde gestellt werden muß, also eine Manipulation zwischen Vor- und Schlupfbruthorde notwendig bleibt.

Beim System nach der EP Anmeldung 0 375 030 A1 werden die Bruteier mit Hilfe eines einlegbaren Rastergitters gleich in die Schlupfhorde eingelegt. Dieses Rastergitter wird zur Schlupfburt entfernt. Die Schlupfhorden mit Bruteiern und Rastergitter werden in einem normalen Kippvorbrutwagen gewendet.

Der Nachteil dieses Verfahrens liegt in der verringerten Eikapazität gegenüber den herkömmlichen Vorbruthorden und in der Notwendigkeit der Herausnahme des Rastergitters und des Umsetzens der Horden auf einen Schlupfbrutwagen.

Aufgabe der Erfindung ist es, ein Verfahren und eine Vorrichtung zu entwickeln, mit dem nach der Aufnahme der Bruteier der Transport, die Lagerung und die Vor- und Schlupfbrut unabhängig von äußeren Einflüssen und in einem kontinuierlichen Verfahrensablauf realisiert werden, wobei das Verfahren der Bebrütung den natürlichen Bedingungen in einem Gelege sehr nahe kommt, die Bruteffektivität erhöht und die technischen und manuellen Aufwendungen wesentlich verringert werden.

Erfindungsgemäß wird die Aufgabe entsprechend den im Hauptanspruch herausgestellten erfinderischen Merkmalen gelöst.
Besondere Ausgestaltungen und Varianten sind Gegenstand der Unteransprüche.

Das erfindungsgemäße Verfahren ist dadurch charakterisiert, daß die jeweiligen Bruteier in einem Eiträger aufgenommen, transportiert, gelagert und bebrütet werden, wobei bis zur Abnahme der geschlüpften Küken keinerlei Manipulationen am und mit dem Brutei außerhalb des Brutbehälters bzw. der maschine vorgenommen werden.

Das notwendige Wenden der Bruteier, was allgemein erforderlich ist, wird durch die gleichfalls geschaffenen Einrichtungen derart realisiert, daß dies ohne das Berühren der Bruteier von außen erfolgt, sondern dies unmittelbar durch ein Verschieben der Eiträger vorgenommen wird. Dies geschieht in der Weise, daß die Eiträger während des Bebrütens auf den jeweiligen Böden der Schlupfhorde aufliegen und umfangsseitig frei liegen, aber infolge der in den Eiträgern vorgesehenen Eieraufnahmen, die der Form der jeweiligen Bruteier angepaßt sind, geführt sind was ein ungewolltes Wenden, Verdrehen bzw. Wegrollen verhindert.

Gewendet werden die Bruteier, indem die Eiträger von außen bewegt werden und die Eieraufnahmen die freiliegenden Eier quer zu ihrer Längsachse verrollen und durch die eingeleitete Verschiebebewegung der Eiträger ein bestimmtes Wenden ermöglicht wird.

Realisiert wird ein Wendewinkel von weit über 90°, was sich positiv auf den Bruterfolg auswirkt.
Dies wird noch durch die schrägliegende Eilage, zur Spitze des Eies geneigt, unterstützt, was wiederum eine optimale Lage der Luftblase und des Keimlings sichert.

Wesentlich bei dem Verfahren ist, daß die mit Bruteiern belegten Eiträger während des Transportes und der Lagerung so in die Schlupfhorde eingesetzt werden, daß ein bestimmter Abstand zum Boden der Schlupfhorde eingestellt bleibt und die Eier somit fest in ihren Aufnahmen in den Eiträgern liegen.

Während des Bebrütens und des Schlüpfens liegen die Eiträger flach auf dem Boden der Schlupfhorde, wobei die Eier aus den Aufnahmen der Eiträger leicht herausgehoben werden, punktförmig den Schlupfhordenboden berühren, aber weiterhin durch die Aufnahmen im Eiträger justiert sind.

Das Verfahren wird in entsprechenden Vorrichtungen realisiert, die als kompakte und geschlossene Brutcontainer oder als offene Hordenwagen für den Einsatz in einem bekannten Brütgehäuse mit den entsprechenden technischen Baugruppen eingesetzt werden bzw. die als offene Hordenwagen ausgebildet, mit Lüfter- und Wendeantrieb ausgerüstet sind und in einem klimatisierten Raum zur Brut eingesetzt werden.

Die Erfindung soll mit folgendem Ausführungsbeispiel näher erläutert werden. Die dazugehörige Zeichnung zeigt in
- Fig. 1:: den Eiträger
- Fig. 2:: eine Schnittdarstellung A-A nach Figur 1
- Fig. 3:: eine Einzelheit aus Figur 2
- Fig. 4:: die Lage des Eies bei abgesenktem Eiträger
- Fig. 5:: eine Schlupfhorde mit eingesetztem Eiträger
- Fig. 6:: eine Schnittdarstellung A-A nach Figur 5
- Fig. 7:: eine Teilansicht der abgesenkten Schlupfhorde
- Fig. 8:: eine schematische Darstellung eines Brutcontainers
- Fig. 9:: eine schematische Vorderansicht nach Figur 1 im Langsschnitt
- Fig. 10:: eine Teilansicht nach Figur 8
- Fig. 11:: eine schematische Darstellung eines Hordenwagens in einem Brütgehäuse
- Fig. 12:: eine Seitenansicht des Hordenwagens nach Figur 11
- Fig. 13:: einen offenen Hordenwagen mit integriertem Lüfter- und Wendeantrieb
- Fig. 14:: eine Seitenansicht nach Figur 13.

Die nach dem vorgeschlagenen Verfahren zu bebrütenden Eier 1 werden auf speziell gestaltete Eiträger 2 abgelegt, die zur Aufnahme der Eier 1 Öffnungen 3 aufweisen, die der Form der jeweiligen Eier 1 angepaßt sind.
In diesen Öffnungen 3 haben die Eier 1 eine stabile Lage und sind in dieser Position allseitig gesichert. In dieser Anordnung und Lage werden die Eier 1 gelagert und transportiert.

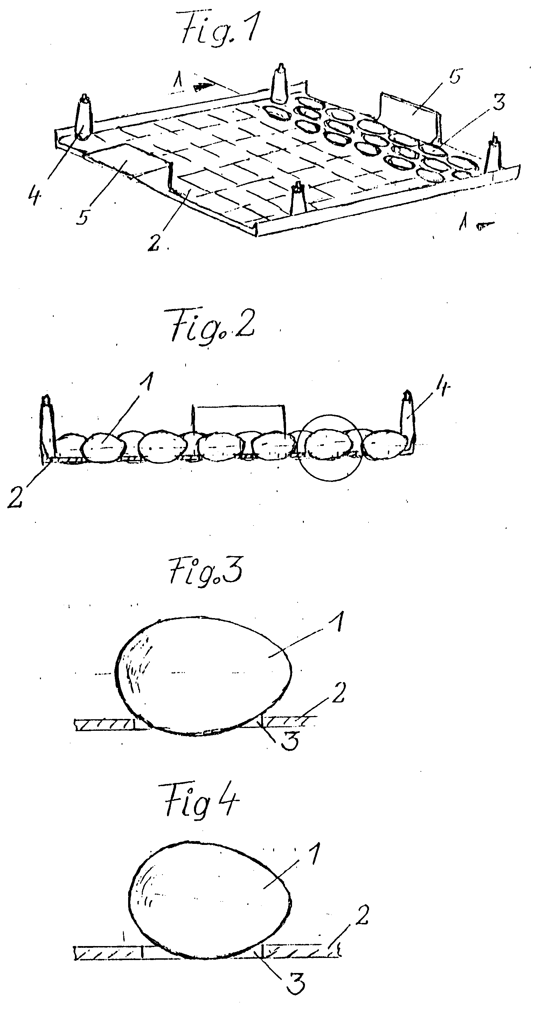

Die Eiträger 2 sind vorzugsweise aus einem Kunststoffmaterial hergestellt und sind untereinander stapelbar. Zu diesem Zweck weisen die Eiträger 2 Stützen 4 auf, auf denen der jeweils aufzustellende Eiträger 2 zur Auflage kommt. An den Querseiten der Eiträger 2 sind Anschläge 5 vorgesehen, die ein Verschieben des jeweiligen Eiträgers 2 ermöglichen.
Diese entsprechende Ausführung ist in der Figur 1 dargestellt, die komplette Belegung und Anordnung der Eier 1 auf dem Eiträger 2 zeigt die Figur 2, während die Figur 3 in einer vergrößerten Darstellung die genaue Lage eines Eies 1 verdeutlicht und zeigt, daß das jeweilige Ei 1 in seiner Lagerposition ca. 2 - 5 mm durch den Eiträger 2 hindurchragt.

Im abgesetzten Zustand kommt der Eiträger 2 auf dem Boden 7 einer Schlupfhorde 6 zum Aufliegen, was nachfolgend näher beschrieben wird und setzt das jeweilige Ei 1 frei. Das Ei 1 liegt dabei punktförmig auf dem Boden 7 auf, ist umfangsseitig freigesetzt und kann seine natürliche Lage, geneigt zur Spitze des Eies 1, einnehmen.
Dies verdeutlicht Figur 4.

Die in der Figur 1 dargestellten Eiträger 2 eignen sich unmittelbar zum Stapeln und für den Einsatz in Schlupfhorden 6, die in sich stapelbar sind, jedoch keine besonderen Aufnahmen für die Eiträger 2 benötigen. Die Eiträger 2 werden direkt auf den Boden 7 der Schlupfhorde 6 aufgelegt, und die Eier 1 befinden sich dann in der nach Figur 4 beschriebenen Position.

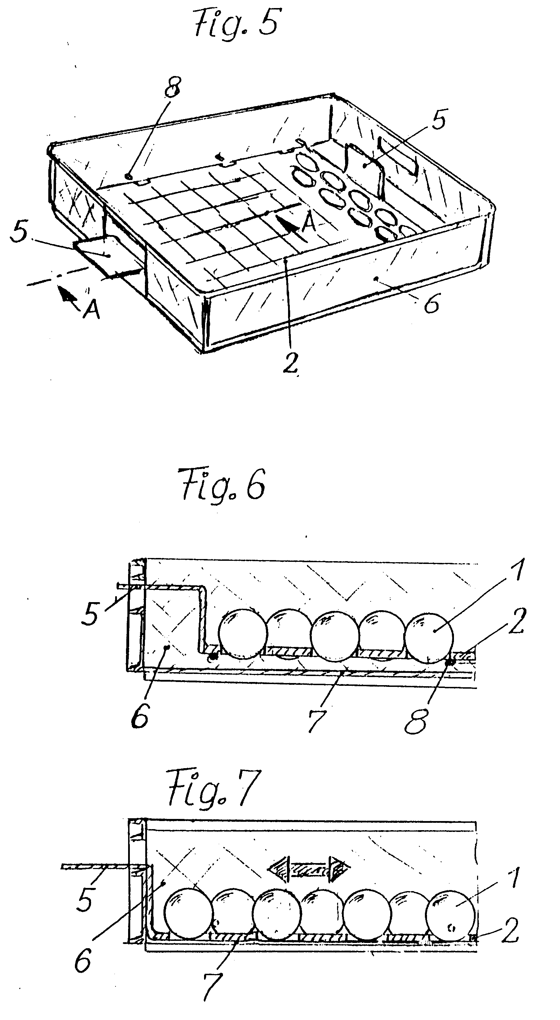

Eine andere Ausführung der Eiträger 2 und deren Einsatz in Schlupfhorden 6 zeigt die Figur 5.

Die Eiträger 2 finden ihre Auflage auf entsprechenden Halterungen 8, die an den Längsseiten der Schlupfhorden 6 vorgesehen sind. In dieser Lage können die Eier 1 transportiert und gelagert werden, ohne daß die fixierte Position der Eier 1 verändert wird.
Die Figur 6 zeigt diese Position.

Durch Entfernen der Halterungen 8 bzw. durch ein Verschieben der Eiträger 2 auf den Halterungen 8 werden die Eiträger 2 auf den Boden 7 der Schlupfhorde 6 abgesetzt, und die Eier 1 befinden sich in der Brut- und Wendepositon, wie in Figur 7 gezeigt.

Jede folgende Bewegung dient der Bewegung der Wendung der Eier 1, wobei bei Erreichen der Schlupfphase die Eiträger 2 nicht mehr bewegt werden, so daß das Küken im Ei 1 sich nicht zu drehen braucht, was sich positiv auf den Bruterfolg auswirkt.

Das Einleiten der Wendebewegung auf die Eier 1 erfolgt über das Betätigen der Anschläge 5 in wechselnder Folge nach einem vorgeschriebenen zeitlichen Schema. Möglich ist auch die Lösung, daß die Eiträger 2 stehen und die Schlupfhorden 6 bewegt werden. In dem Fall sind die Schlupfhorden 6 so gestaltet, daß sie die nötige Luftdurchlässigkeit für die Ventilation besitzen, wobei die Schlupfhorden 6 mit einem geschlossenen oder performierten Boden 7 ausgeführt sind.

Die zu bebrütenden Eier 1 können also unmittelbar im Legestall auf die Eiträger 2 aufgelegt werden, bei der Verwendung von Eiträgern 2 mit Stützen 4 können diese übereinander gestapelt, transportiert und gelagert werden und in der Brüterei in die geeigneten Schlupfhorden 6 eingesetzt werden.

Bei der anderen Form der Eiträger 2 werden die Eiträger 2 in den Schlupfhorden 6 in Transport- und Lagerstellung mit den Eiern 1 belegt und übereinander gestapelt. Sie können so auf einen Transporter gesetzt oder gleich auf einem Brutwagen gestapelt werden.

Die Bebrütung der Eier 1 erfolgt in einem Brutcontainer, in einem Hordenwagen, der in einem bekannten Brüter eingesetzt wird oder in einem Brutwagen.

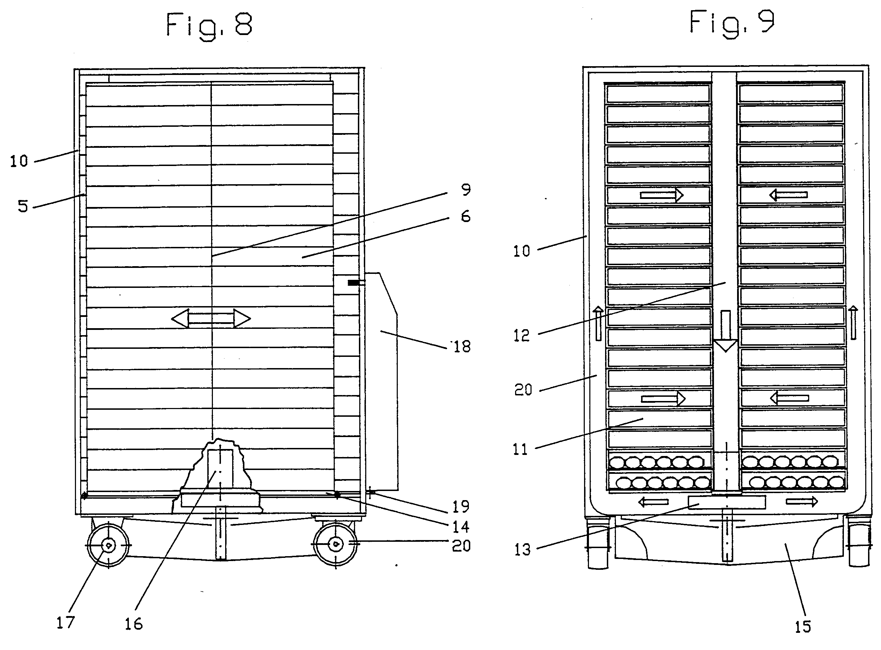

Der Brutcontainer 9 stellt ein komplettes Erzeugnis dar, in dem alle zur künstlichen Brut benötigten Baugruppen vereint sind.
Siehe Fig. 8 und 9.
Der Brutcontainer 9 besteht aus einem geschlossenen Behälter mit isolierten Außenwänden 10 und einem beweglichen Stapelrahrnen 14 zur Aufnahme der Schlupfhorden 6.
Unterhalb des Stapelrahmens 14 ist eine Wasserwanne 15 mit einem Lüfter 13 auswechselbar vorgesehen, während eine Steuer- und Regeleinrichtung 18 an einer Außenwand 10 gleichfalls abnehmbar angeordnet ist. Auf vorgesehenen Rädern 17 ist der gesamte Brutcontainer 9 verfahrbar.

Die Schlupfhorden 6 mit den Eiträgern 2 sind im Brutcontainer 9 übereinander gestapelt und im horizontal beweglichen Stapelrahmen 14 so gelagert, daß zwischen den Stapeln der Schlupfhorde 6 ein Längsschacht 12 gebildet wird und die ventilierende Luft durch die Perforation 11 der Schlupfhorde 6 waagerecht strömen kann.
Ein weiterer Freiraum 20 ist zwischen den gestapelten Schlupfhorden 6 und den isolierten Außenwänden 10, sowohl zu den Längsseiten als auch zu den Stirnseiten, vorhanden.

Die Eiträger 2 stützen sich mit ihren Anschlägen 5 an den Stirnseiten des Brutcontainers 9 ab.

Das Wenden der Eier 1 erfolgt über einen Wendeantrieb, der mittels eines Kurbeltriebes 19 mit dem beweglichen Stapelrahmen 14 verbunden ist und die Schlupfhorden 6 horizontal verschiebt. Das Wenden erfolgt in der oben beschriebenen Art und Weise.

Die Regelung erfolgt über die am Brutcontainer 9 vorgesehene Steuer- und Regeleinrichtung 18.

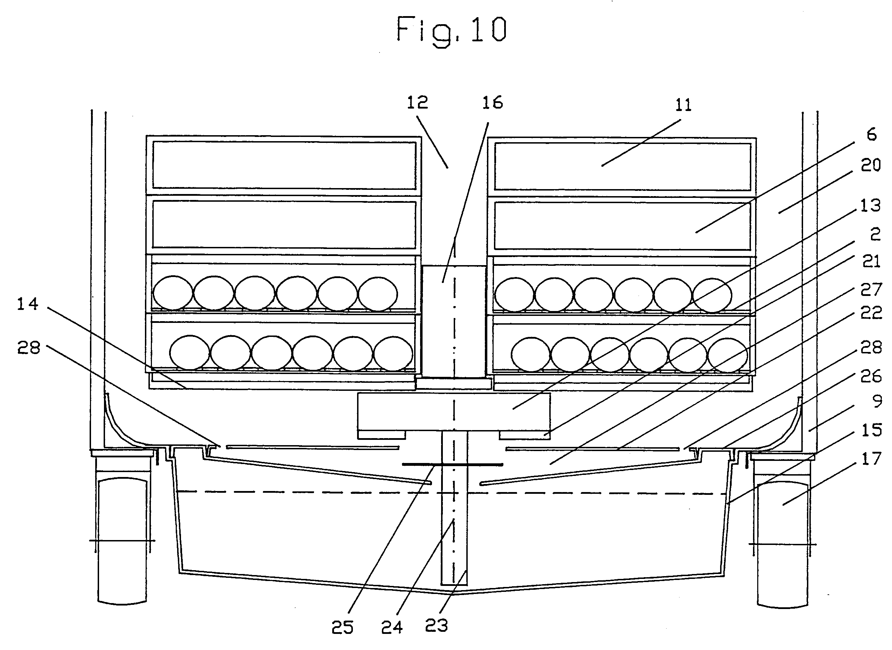

Die erfindungsgemäße Ausgestaltung und Anordnung der Belüftungs- und Befeuchtungseinrichtung ist in Figur 10 dargestellt und besteht aus einem Elektromotor 16 mit einem Lüfterrad 13, welches als Radiallüfter ausgebildet ist, sowie unterhalb des Lüfterrades 13 vorgesehenen Luftschaufeln 21.
Unmittelbar mit der Welle des Elektromotors 16 bzw. in axialer Verlängerung des Lüfters 13 ist ein Rohrstück 23 vorhanden und mit der Welle verbunden, welches im Innern einen schraubenförmigen Körper 24 aufweist.

Das Rohrstück 23 taucht in das Wasserbad der Wasserwanne 15 ein und besitzt oberhalb des Wasserspiegels eine Schleuderscheibe 25.

Zwischen den Abdeckungen 22 und 26 ist die Befeuchtungskammer 27 vorgesehen.

Die Abdeckungen 22; 26 weisen jeweils zentrische Öffnungen auf, und die obere Abdeckung 22 besitzt umfangsseitig Belüftungsschlitze 28.

Während die obere Abdeckung 22 gerade ausgebildet ist, ist die untere Abdeckung 26 geneigt, als ablaufende Schräge zur Achsenmitte ausgebildet.

Die Abdeckungen 22; 26 begrenzen die Befeuchtungskammer 27 sowohl zum Brutraum als auch zum Wasserbecken und verhindern somit, daß eine zu hohe und ungewollte Oberflächenverdunstung des Wassers erfolgt und verhindern andererseits die Tröpfchenbildung im Brutraum des Brutcontainers 9.
Die in Figur 10 dargestellte Belüftungs- und Befeuchtungseinrichtung ist so konzipiert, daß auf der dem Elektromotor 16 zugewandten oberen Seite des Lüfterrades 13 die Luft aus dem Mittelschacht 12 abgesaugt und horizontal unterhalb der Schlupfhorden 6 nach außen befördert wird.

Die an der Unterseite des Lüfterrades 13 vorgesehenen Luftschaufeln 21 halten einen zweiten Luftstromkreis aufrecht, der durch die Befeuchtungskammer 27 und die umfangsseitigen Belüftungsschlitze 28 in den Brutcontainer 9 gelenkt wird.

Der im Rohr 23 angeordnete schraubenförmige Körper 24 fördert, je nach Drehrichtung, das Wasser aus der Wasserwanne 15 nach oben in die Befeuchtungskammer 27 oder drückt das überflüssige Wasser aus dem Rohr 23 in die Wasserwanne 15 zurück.

Das nach oben beförderte Wasser wird über die zentrische Öffnung der unteren Abdeckung 26 der Schleuderscheibe 25 zugeleitet und in der Befeuchtungskammer 27 versprüht.
Überschüssiges Wasser läuft über die geneigte Oberfläche der unteren Abdeckung 26 in die Wasserwanne 15 zurück.
Mit Hilfe der unteren Luftschaufeln 21 wird durch die zentrische Öffnung der oberen Abdeckung 22 Luft aus dem Brutraum durch die Befeuchtungskammer 27 gesaugt, wobei die Sprührichtung des Wassers dem entgegen gerichtet ist.

Die an der Unterseite des Lüfters 13 austretende und stark angefeuchtete Luft vermischt sich sehr homogen mit der von der Oberseite des Lüfterrades 13 geförderten Umluft.

Durch entsprechende Umsteuerung des Lüfters 13, was, abgeleitet aus den im Brutcontainer 9 vorherrschenden Bedingungen und den gewünschten für den Brutvorgang optimalen Bedingungen, über die Steuer- und Regeleinrichtung 19 erfolgt, kann die Luftfeuchtigkeit im Brutcontainer 9 reguliert werden.

Der Strömungskreislauf ist im Brutcontainer 9 hergestellt, wenn die vom Lüfterrad 13 kommende Luft sowohl durch die Freiräume 20 als auch durch die Schlupfhorden 6 in den Längsschacht 12 gelangt ist.

Dieser Zyklus ist regelbar durch die Steuer- und Regeleinrichtung 18, in der Temperaturregeler und -meßfühler, Feuchteregeler- und -meßfühler vorgesehen sind, die das System überwachen und regeln.
Gleichfalls in dieser Einrichtung 18 sind die Steuerorgane für den Wendeantrieb und die Frischluftzufuhr bzw. Luftkühlung vorgesehen.

Zu den vorgenannten Vorteilen der Eilage und der Wendung kommen beim Brutcontainer folgende Vorteile hinzu:
- Die Eier befinden sich von der Auflage und Einlage in den Container bis zur Kükenabnahme in ein und demselben Raum.
   Die relativ kleine Menge Eier je Container verhindert eine Keimausbreitung auf große Eimengen wie in Großraumbrütern.
   Das Prinzip "all in - all out" wird in hervorragender Weise realisiert.
   Der Einsatz von Schlupfbruthorden mit geschlossenen Böden verhindert ein Druchlaufen von Eimasse in darunterstehende Schlupfhorden beim Zerbrechen eines Eies.
- Die Brutcontainer können in den Brütereiräumen sowohl in einem Raum von der Vorbrut bis zur Schlupfbrut stehen, als auch von Vorbrutsammelräumen in Schlupfbruträume transportiert werden, ohne die Container zu öffnen.
- Die Brutreste bleiben im Container und verunreinigen nicht den Schlupfbrutraum.
- Verringerung des Bedien- und Arbeitsaufwandes.

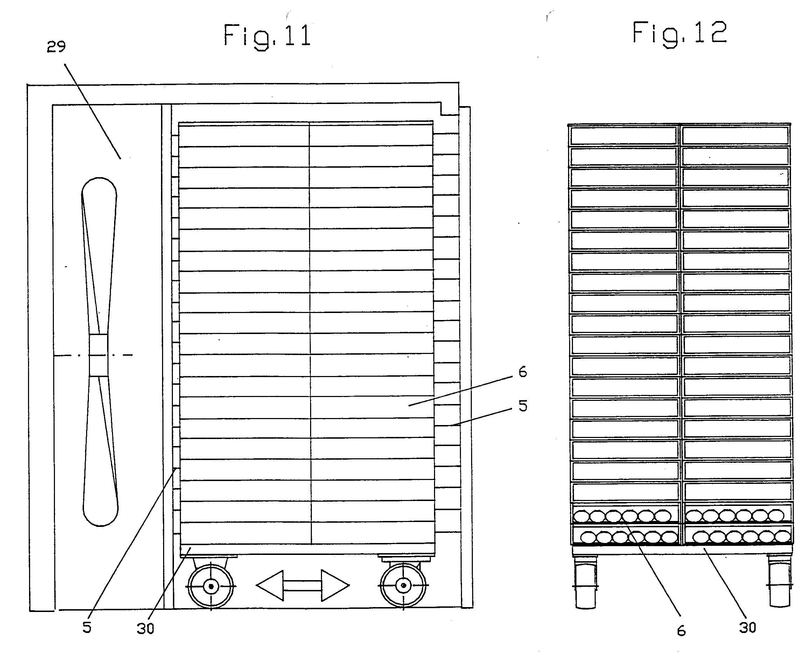

Die Anordnung der Schlupfhorden 6 in herkömmlich bekannten Brütern geht aus den Figuren 11 und 12 hervor. Es ist dargestellt, daß die Schlupfhorden 6 in einem speziellen Hordenwagen eingesetzt werden und dieser unmittelbar in einem Brutaggregat 29 positioniert wird.

Die Hordenwagen oder auch Regalwagen 30 werden in den Brutaggregaten 29 derart gelagert, daß die Schlupfhorden 6 an den Außenwänden abgestützt werden und eine Wendung der Eier über das seitliche Verschieben der auf Rädern geführten Regalwagen 30 erfolgt.

Der Einsatz eines Brutwagens 31 in großen Brutlokalen, klimatisierten Räumen in Brütereien, ist gleichfalls möglich, wobei der Brutwagen 31 über einen Längsschacht 12 verfügt und die Belüftung der zu bebrütenden Eier über einen unterhalb der Stapelrahmen vorgesehenen Radiallüfter 13 erfolgt.

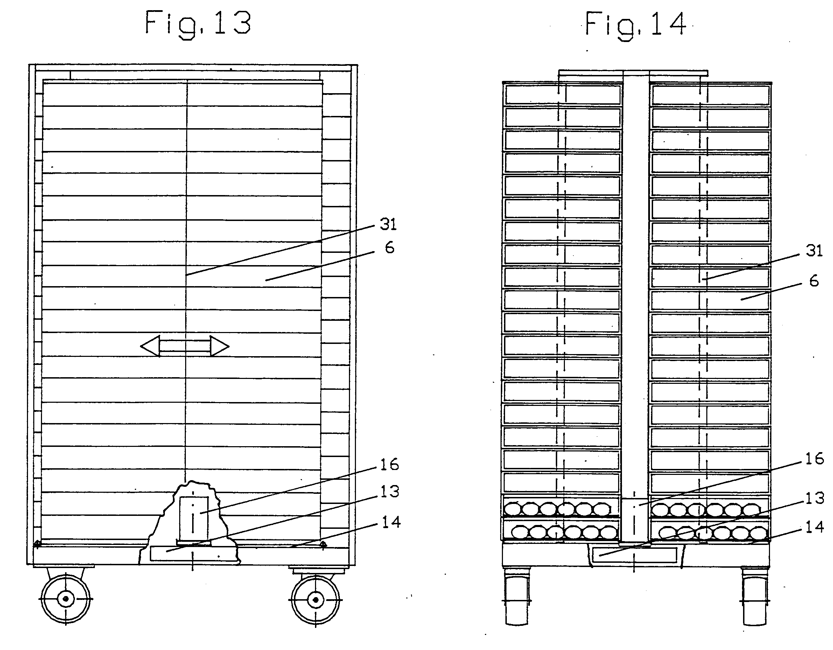

Diese Ausführungen sind in den Figuren 13 und 14 dargestellt.

## Patentansprüche

1. Verfahren zur Bebrütung von Eiern aller Geflügelarten, die auf Horden oder Plasttrays gelegt werden und anschließend in Hordenwagen/Hordenregalen eingeschoben werden, wobei die Bruteier in Eieraufnahmen (3) eines Eiträgers (2) aufgenommen und in einer Schlupfhorde (6) eingesetzt, gelagert, transportiert und bebrütet werden, und wobei die Bruteier während des Bebrütens regelmäßig gewendet werden, gekennzeichnet dadurch, daß
die Bruteier während der Lagerung und des Transportes mit Abstand zum Boden (7) der Schlupfhorden (6) und umfangsseitig positioniert sind,
während des Bebrütens punktförmig zu ihrer Spitze geneigt und umfangsseitig frei auf dem Boden (7) aufliegen,
von einer vorgesehenen Einrichtung um einen Winkel von vorzugweise > 90° gewendet werden, indem die Eiträger von außen bewegt werden und die Eieraufnahmen die freiliegenden Eier quer zu ihrer Längsachse verrollen und durch die eingeleitete Verschiebebewegung der Eiträger ein bestimmtes Wenden ermöglicht wird,
die Vorbrut durch Beenden der Wendebewegung abgeschlossen wird und die Eier ohne Umlage zum Schlupf gebracht werden und das Bebrüten kontinuierlich in einem Brüter abläuft.

2. Vorrichtung zur Durchführung des Verfahrens nach Anspruch 1, gekennzeichnet dadurch, daß
in einem Brutcontainer (9) auswechselbar ein Stapelrahmen (14) mit einordbaren Schlupfhorden (6), die mit
Eiträgern (2) versehen sind, angeordnet ist,
wobei der Stapelrahmen (14) mit einem Kurbeltrieb (19), als Wendeantrieb ausgebildet, steuerbar über eine Steuer- und Regeleinrichtung (18), verbunden ist,
die Schlupfhorden (6) im Stapelrahmen (14) untereinander und zum Brutcontainer (9) mit Abständen, umfangsseitig Freiräume (20) und mittig im Brutcontainer (9) einen Längsschacht (12) bildend, einsetzbar sind,
wobei unterhalb des Brutcontainers (9) eine Belüftungs- und Befeuchtungseinrichtung (31) angeordnet ist.

3. Vorrichtung nach Anspruch 2, gekennzeichnet dadurch, daß
die Steuer- und Regeleinrichtung (18) abnehmbar am Brutcontainer (9) angeschlossen ist und die Schlupfhorden (6) sich mit den Anschlägen (5) der Eiträger (2), die Schlupfhorden (6) durchgreifend, an den Außenwänden (17) abstützen.

4. Vorrichtung nach Ansprüchen 2 und 3, gekennzeichnet dadurch, daß
die Eiträger (2) mit den Eiformen angepaßten Öffnungen (3) versehen und auf den Eiträgern (2) Stützen (4) angeordnet sind.

5. Vorrichtung von Ansprüchen 2 bis 4, gekennzeichnet dadurch, daß
die Schlupfhorden (6) mit Halterungen (8) versehen sind und die Eiträger (2), auf den Halterungen (8) aufsetzbar oder auf den Boden (7) der Schlupfhorde (6) abschließbar, in den Schlupfhorden (6) angeordnet sind.

6. Vorrichtung nach Ansprüchen 2 bis 5, gekennzeichnet dadurch, daß
die Belüftungs- und Befeuchtungseinrichtung (31) aus einer Wasserwanne (15) mit oberhalb der Wasserwanne (15) vorgesehenen Befeuchtungskammer (27) besteht,
wobei die oberen und unteren Abdeckungen (22, 26) der Wasserwanne (15) mit zentrischen Öffnungen versehen dind, durch die ein Rohrstück (23) hindurchgreifend in die Wasserwanne (15) ragt, auf dem Rohrstück (23) eine Schleuderscheibe (25) vorgesehen ist und
ein Elektromotor (16) mit auf seiner Welle sitzendem Lüfter (13) und Luftschaufeln (21) im Brutcontainer (9) angeordnet sind.

7. Vorrichtung nach Ansprüchen 2 bis 6, gekennzeichnet dadurch, daß
das Rohrstück (23) im Inneren einen schraubenförmig ausgestalteten Körper (24) aufweist und in der oberen Abdeckung (22) umfangsseitig Belüftungsschlitze (28) vorgesehen sind.

## Claims

1. Process for the incubation of eggs of all kinds of poultry, which are laid on hurdles or plastic trays and then inserted in platform rack trucks/platform rack shelves, whereby the eggs to be incubated are placed in the egg receptacles (3) of a egg carrier (2) and are placed, stored, transported and incubated in a hatching hurdle (6), and whereby the eggs to be incubated are regularly turned during incubation, distinguished by the fact that
the eggs to be incubated are positioned with clearance to the floor (7) of the hatching hurdles (6) and on their periphery during storage and transport,
they are lying inclined in a punctiform way towards their tip with their periphery free on the floor (7) during incubation,
they are turned by a foreseen device through an angle of preferably > 90°, by means of the egg carriers being moved externally and the egg receptacles rolling the exposed eggs transversely to their longitudinal axis, and as a result of the initiated relocating movement of the egg carriers a certain turning is made possible,
the pre-incubation is concluded by ending the turning movement and the eggs are hatched without rearrangement and incubation proceeds continuously in an incubator.

2. Device for implementing the process in keeping with claim 1, distinguished by the fact that
a replaceable stacking frame (14) with hatching hurdles (6), which are equipped with egg carriers (2) and can be ordered, is arranged in an incubating container (9),
whereby the stacking frame (14) is connected to a crank mechanism (19), designed as a turning drive, controllable via an open and closed-loop control facility (18),
the hatching hurdles (6) can be used below each other in the stacking frame (14) and with spaces towards the incubation container (9) thus forming clearance (20) on the periphery and a longitudinal shaft (12) in the middle of the incubation container (9),
whereby a ventilation and humidification element (31) has been placed below the incubation container (9).

3. Device in keeping with claim 2, distinguished by the fact that
the removable open and closed-loop control facility (18) is connected to the incubation container (9) and that the hatching hurdles (6) are supported on the outer walls (17) by means of the stoppers (5) of the egg carriers (2), which penetrate the hatching hurdles (6).

4. Device in keeping with claims 2 and 3, distinguished by the fact that
the egg carriers (2) are provided with openings (3) that are adapted to the egg forms and that supports (4) have been arranged on the egg carriers (2).

5. Device in keeping with claims 2 to 4, distinguished by the fact that
the hatching hurdles (6) are equipped with holding devices (8) and the egg carriers (2), which can be placed on the holding devices (8) or latched to the floor (7) of the hatching hurdle (6), have been arranged in the hatching hurdles (6).

6. Device in keeping with claims 2 to 5, distinguished by the fact that
the ventilation and humidification element (31) consists of a water trough (15) with a humidification chamber (27) provided above the water trough (15),
whereby the upper and lower covers (22, 26) of the water trough (15) are provided with centric openings, through which a piece of pipe (23) penetrates and projects into the water trough (15) - a grease slinger (25) has been provided on the piece of pipe (23)
and an electric motor (16) with a fan (13) sitting on its shaft and air blades (21) have been placed in the incubation container (9).

7. Device in keeping with claims 2 to 6, distinguished by the fact that
the piece of pipe (23) has a helically designed body (24) on the inside and that peripheral ventilation slits (28) are provided in the upper cover (22).

## Revendications

1. Procédé pour couver des oeufs de toute espèce de volaille qui sont pondus sur des grilles de séchage ou des plateaux de plastique et introduits ensuite dans un chariot à claies/des étagères à claies, d'où les oeufs à couver sont mis dans les réceptacles (3) d'un support d'oeufs (2) et posés dans un grille d'éclosion (6), où ils sont stockés, transportés et couvés. Les oeufs à couver sont tournés régulièrement pendant la couvaison. Le procédé se distingue par les opérations suivantes:
Pendant le stockage et le transport, les oeufs à couver sont positionnés avec leur étendue en gardant une distance par rapport à la base des grilles d'éclosion (6)
Pendant le couvage, leur pointe est incliné vers le bas en couchant sur la base (7), espacés entre eux.
Ils sont tournés par un dispositif d'un angle supérieur à 90° de préférence en remuant les supports d'oeufs de l'extérieur en changeant la position des oeufs transversalement à leur axe longitudinal par les réceptacles et en permettant une rotation précise par le déplacement amorcé des supports d'oeufs,
La pré-couvaison est terminée en achevant la rotation, les oeufs sont menés à l'éclosion sans changement de position et la couvaison se réalise en continu dans un dispositif correspondant.

2. Dispositif pour la réalisation du procédé suivant revendication 1, qui se distingue par les opérations suivantes:
dans un conteneur de couvaison (9) se trouve un support d'empilage échangeable (14) avec des grilles d'éclosion à régler (6), équipés de
supports d'oeufs (2), et
dont le support d'empilage est liée à une commande à bielle (19) qui fonctionne comme dispositif de virage, réglable par un dispositif régulateur (18),
Les grilles d'éclosion (6) sont à insérer dans le support d'empilage (14). Ils gardent leur distance respective et leur distance au conteneur (9) en laissant des éspaces libres (20) jusqu'à l'enceinte et une cuve logitudinale (12) au milieu du conteneur de couvaison (9).
Au-dessous du conteneur de couvaison (9) se trouve une installation d'aération et d'humidification (31).

3. Dispositif suivant revendication 2, qui se distingue par les opérations suivantes:
Le dispositif régulateur (18) démontable est branché sur le conteneur de couvaison (9) et les grilles d'éclosion (6) s'appuyent sur les parois extérieures avec les butées (5) des supports d'oeufs (2), qui passent à travers les grilles d'éclosion (6).

4. Dispositif suivant les revendications 2 et 3, qui se distingue par les opérations suivantes:
Le support d'oeufs (2) sont équipés d'orifices de la forme des oeufs et sur les supports d'oeufs (2) se trouvent des étançons.

5. Dispositif suivant les revendications 2 à 4, qui se distingue par les opérations suivantes:
Les grilles d'éclosion (6) sont équipés de fixations (8) et les supports d'oeufs (2) peuvent être posés sur les fixations (8) ou ils sont montés dans la base (7) des grilles d'éclosion (6), où ils peuvent être verrouillés.

6. Dispositif suivant les revendications 2 à 5, qui se distingue par les opérations suivantes:
L'installation d'aéreation et d'humidifaction (31) est composée d'une cuve d'eau avec une chambre d'humidification (27) au-dessus.
Les couvercles supérieures et inférieures (22,26) de la cuve d'eau sont équipés des orifices centrés, à travers lesquels un tuyau (23) avance dans la cuve d'eau (15). Sur le tuyau (15) est prévu un disque centrifuge (25)
et un moteur électrique (16) avec sur son arbre un ventilateur (13) et des aubes (21) est monté dans le conteneur de couvaison (9).

7. Dispositif suivant les revendications 2 à 6, marqué par le suivant:
Un tuyau (23) dispose à l'intérieur d'un corps en forme de vis (24) et dans le couvercle supérieur (22) se trouvent des grilles d'aéreation (28).
